# EUROPEAN PATENT APPLICATION

(11) **EP 3 940 261 A1**
(43) Date of publication of application: **19.01.2022**
(21) Application number: 20770650.8
(22) Date of filing: 04.03.2020
(51) Int. Cl.: F16H 7/08, F02B 67/06

(54) **CHAIN TENSIONER**

(30) Priority: 11.03.2019 JP 2019043635
(71) Applicant: NTN Corporation, Osaka-shi, Osaka 550-0003 (JP)
(72) Inventor: SATO, Seiji, Iwata-shi, Shizuoka 438-8510 (JP)
(74) Representative: Grünecker Patent- und Rechtsanwälte PartG mbB
(86) International application number: PCT/JP2020/009063
(87) International publication number: WO 2020/184322

(57) **Abstract**

A chain tensioner is proposed which includes: a pressure chamber (18) of which the volume changes with axial movement of a plunger (10) in a tubular cylinder (9); a check valve disposed between the interior of the plunger (10) and the pressure chamber (18); a communication path (30) through which a leakage gap (19) between the plunger (10) and the cylinder (9) communicates with the interior of the plunger (10); and a reverse flow check valve (40) disposed in an oil supply path (31) that connects the inside of the cylinder (9) to the outside thereof, and restricts the flow of oil from inside to outside the cylinder (9).

## Description

### TECHNICAL FIELD

The present invention relates to a chain tensioner used to maintain the tension of mainly chains for driving automotive engine cams, or chains for driving oil pumps.

### BACKGROUND ART

Chain transmission systems used in engines of, e.g., automobiles include, for example: one that transmits the rotation of a crankshaft to a camshaft or camshafts; one that transmits the rotation of a crankshaft to engine accessories such as an oil pump, a water pump and a supercharger; one that transmits the rotation of a crankshaft to a balancer shaft; and one that couples together the intake and exhaust cams of a twin-cam engine. Chain tensioners are used to keep the tension in the chains of such chain transmission systems within an appropriate range.

A typical chain tensioner generates a hydraulic damper force by supplying oil from the engine, thereby keeping constant the tension in the chain. However, since no oil is supplied while the engine is stopped, the chain tensioner may be unable to generate a predetermined hydraulic damper force after the engine is started until the pressure chamber in the chain tensioner is filled with oil. In such a case, the chain tensioner will be pushed in to a large degree, causing flapping of the chain and abnormal sounds. To avoid this situation, many chain tensioners include what is known as a "no-retraction mechanism" that prevents the plunger from being pushed in beyond a certain amount (see, for example, the below-identified Patent Document 1).

A chain tensioner is also known which is capable of reducing the amount of oil flowing out of the chain tensioner by circulating oil within the chain tensioner, and which is capable of generating, using the oil circulated and stored inside the chain tensioner, a hydraulic damper force immediately after the engine is started (see, e.g., the below-identified Patent Document 2).

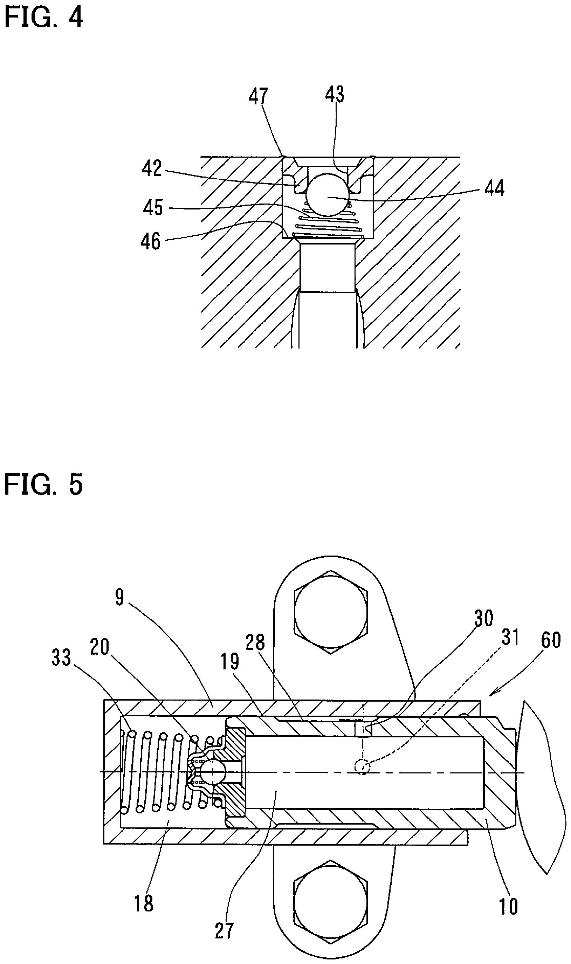

As such an example, the chain tensioner 60 shown in Fig. 5 includes a tubular cylinder 9 having one end thereof open, and the other end closed; a tubular plunger 10 axially slidably supported by the inner periphery of the cylinder 9; a return spring 33 biasing the plunger 10 in the direction in which the plunger 10 protrudes beyond the one end of the cylinder 9 (this direction is hereinafter referred to as the "protruding direction"); a reservoir chamber 27 defined within the plunger 10; a pressure chamber 18 defined within the cylinder 9 on the other end side of the plunger 10 such that the volume of the pressure chamber 18 changes as the plunge 10 axially moves; and a check valve 20 disposed at the end of the plunger 10 inserted in the cylinder 9 to allow only the flow of oil from the reservoir chamber 27 to the pressure chamber 18.

The cylinder 9 has an oil supply path 31 through which oil supplied by, e.g., an oil pump is introduced from outside to inside of the cylinder 9. The oil supply path 31 has its inner (relative to the cylinder 9) end open to an oil supply space 28 defined between the outer periphery of the plunger 10 and the inner periphery of the cylinder 9. A leakage gap 19 is defined between the outer periphery of the plunger 10 and the inner periphery of the cylinder 9. The leakage gap 19 is a minute gap extending from the pressure chamber 18 to the opening of the cylinder 9 at the one end thereof, via the oil supply space 28. The leakage gap 19 and the oil supply space 28 communicate with the reservoir chamber 27 via a communication path 30. The return spring 33 provides a thrust force to the plunger 10 to allow the plunger 10 to move quickly following flapping movement of the chain.

When the tension in the chain increases during operation of the engine, the tension in the chain moves the plunger 10 in the direction in which the plunger 10 is pushed into the cylinder 9 toward the other end of the cylinder 9 (this direction is hereinafter referred to as the "pushed-in direction"), thereby removing the tension in the chain. The movement of the plunger 10 in this direction increases the pressure in the pressure chamber 18, thus closing the check valve 20, so that oil flows from the pressure chamber 18 through the leakage gap 19 into the oil supply space 28. When passing through the leakage gap 19, oil produces a damper force due to its viscous resistance, and the damper force allows the plunger 10 to slowly move in the pushed-in direction. At this time, oil partially flows through the portion of the leakage gap 19 on the one end side of the oil supply space 28, to the outside of the chain tensioner 60, and then returns to the engine side. However, because the leakage gap 19 is a minute gap and thus provides a large flow resistance, most part of the oil in the oil supply space 28 returns to the reservoir chamber 27 via the communication path 30.

On the other hand, when the tension in the chain decreases during operation of the engine, the biasing force of the return spring 33 moves the plunger 10 in the direction in which the plunger 10 protrudes beyond the one end of the cylinder 9, thereby removing any slack in the chain. The movement of the plunger 10 in this direction causes the check valve 20 to open, allowing a flow of oil from the reservoir chamber 27 into the pressure chamber 18, so that the plunger 10 moves quickly in the protruding direction.

### PRIOR ART DOCUMENTS

### PATENT DOCUMENTS

Patent Document 1: JP H03-010819B
Patent Document 2: JP 2015-183767A

### SUMMARY OF THE INVENTION

### OBJECT OF THE INVENTION

In the conventional chain tensioner 60 illustrated in Fig. 5, immediately after the engine is started and until oil is supplied from an oil pump via oil piping in the engine, oil stored in the tensioner is used to generate a hydraulic damper force. However, depending, e.g., on the positional relationship between the oil supply path 31, which is the connecting point of the tensioner side to the engine-side oil piping, and the pressure chamber 18 and the reservoir chamber 28 in the tensioner, or depending on the mounting angle of the tensioner relative to the engine, oil in the tensioner may be sucked into the oil piping when the engine is stopped, due to a drop in oil pressure in the oil piping. Furthermore, for a while after the engine is started, due to a drop in oil pressure in the oil piping, it may be difficult to reliably circulate oil from the pressure chamber 18 to the reservoir chamber 27. In these cases, due to a reduced amount of oil in the tensioner, the tensioner is incapable of producing a suitable thrust force immediately after the engine is started.

An object of the present invention is to provide a chain tensioner that produces a suitable thrust force immediately after the engine is started.

In order to achieve this object, the present invention provides a chain tensioner comprising: a tubular cylinder having one end thereof open, and the other end thereof closed; a tubular plunger axially slidably supported by an inner periphery of the cylinder; a pressure chamber defined in the cylinder such that a volume of the pressure chamber changes as the plunge axially moves; a check valve that allows only a flow of oil from an interior of the plunger toward the pressure chamber; a leakage gap between an outer periphery of the plunger and an inner periphery of the cylinder; a communication path that allows communication between the leakage gap and the interior of the plunger; an oil supply path connecting inside of the cylinder to outside of the cylinder; and a reverse flow check valve disposed in the oil supply path, and configured to allow a flow of oil from the outside to the inside of the cylinder and restrict a flow of oil from the inside to the outside of the cylinder.

The reverse flow check valve may comprise: an opening of the oil supply path, the opening being open to the outside of the cylinder; a valve hole disposed at the opening; a valve element disposed inside the cylinder and configured to open and close the valve hole; and a spring biasing the valve body in the valve closing direction toward the valve hole.

The valve hole may be formed in a valve seat which is fixedly press-fitted into the opening.

A crimped portion may be disposed around the opening so as to prevent the valve seat from being pulled out.

The spring may be a tapered coil spring having a smaller diameter on the side of the valve body.

In any of the above-described arrangements, the chain tensioner may further comprise a seal ring disposed between the outer periphery of the plunger and the inner periphery of the cylinder, at a position closer to the one end than is the oil supply path.

### ADVANTAGES OF THE INVENTION

The chain tensioner according to the present invention produces a sufficient thrust force immediately after the engine is started.

### BRIEF DESCRIPTION OF THE DRAWINGS

Fig. 1 shows the entirety of a chain transmission system including a chain tensioner.
Fig. 2A is a right side view of the chain tensioner of Fig. 1.
Fig. 2B is a rear view of Fig. 2A.
Fig. 2C is a sectional view taken along line c-c of Fig. 2B.
Fig. 3 is a vertical sectional view of the chain tensioner embodying the present invention.
Fig. 4 is an enlarged view of a portion of a modification of the embodiment of Fig. 3.
Fig. 5 is a vertical sectional view of a conventional chain tensioner.

### EMBODIMENT

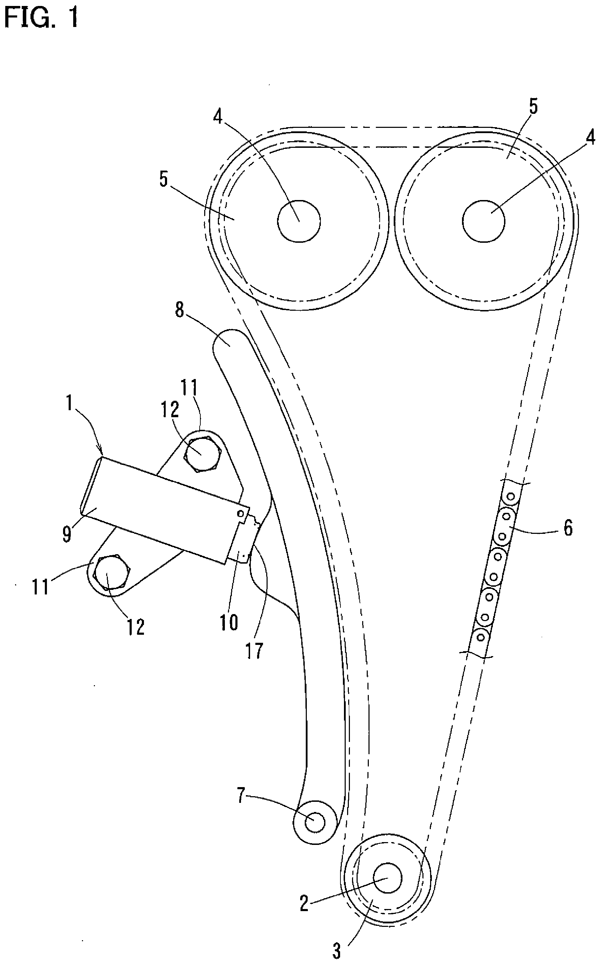

The embodiment of the present invention is described with reference to the drawings. Fig. 1 illustrates a chain transmission system including a chain tensioner 1 embodying the present invention. The chain transmission system further includes a sprocket 3 fixed to the crankshaft 2 of an engine; sprockets 5 fixed, respectively, to two camshafts 4; and a chain 6 coupling the sprocket 3 to the sprockets 5. The rotation of the crankshaft 2 is transmitted to the camshafts 4 by the chain 6, and rotates the camshafts 4, thereby opening and closing the valves of the combustion chambers.

While the engine is operating, the crankshaft 2 always rotates in the same direction (clockwise direction in Fig. 1), and the side of the chain 6 moving toward the sprocket 3 (right side in Fig. 1) becomes a tight side, whereas the side of the chain 6 moving away from the sprocket 3 (left side in Fig. 1) becomes a slack side. A chain guide 8 supported for pivotable movement about a pivot shaft 7 is in contact with the slack side of the chain 6. The chain tensioner 1 presses the chain 6 via the chain guide 8.

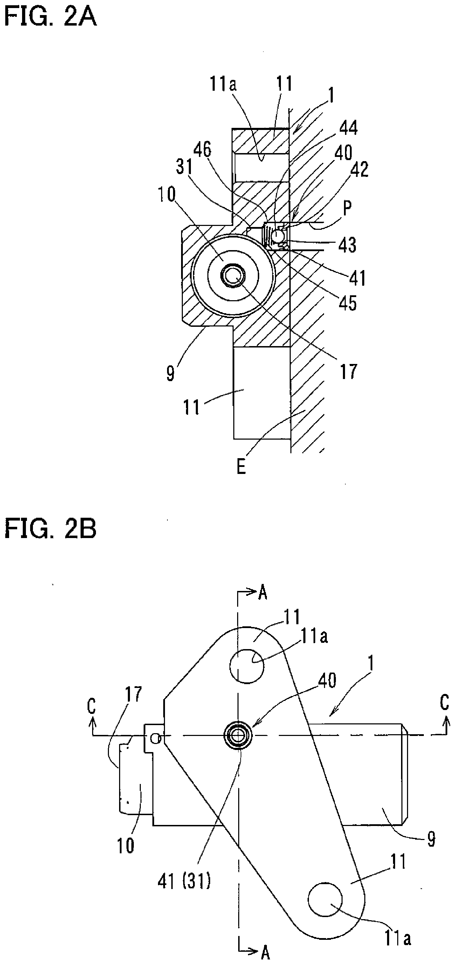

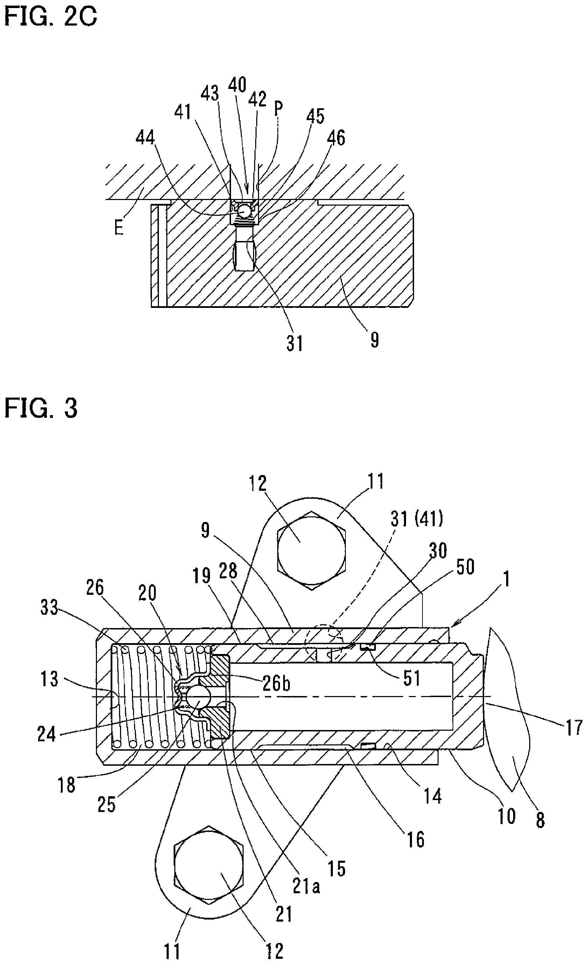

As illustrated in Figs. 2A, 2B, 2C and 3, the chain tensioner 1 includes a tubular cylinder 9 having one end thereof open, and the other end closed; and a plunger 10 axially slidably supported by the inner periphery of the cylinder 9. The plunger 10 has a protruding end 17 protruding beyond the one end of the cylinder 9 and pressing the chain guide 8.

The cylinder 9 is integrally formed of a metal (such as an aluminum alloy). An attachment piece 11 having a plurality of holes 11a (see Figs. 2A and 2B) is integrally formed on the outer periphery of the cylinder 9. By inserting bolts 12 through the respective holes 11a of the attachment piece 11 and tightening the bolts 12, the cylinder 9 is fixed to a wall surface E of the engine such as the cylinder block. The cylinder 9 is attached to the engine wall surface E such that the direction in which the plunger 10 protrudes beyond the cylinder 9 is an obliquely downward direction.

The plunger 10 is a tubular member of which the other end, which is inserted in the cylinder 9, is open, and the one end, which is the protruding end 17 protruding beyond the cylinder 9, is closed. The plunger 10 is made of an iron-based material (e.g., steel such as SCM (chrome molybdenum steel) or SCr (chrome steel)).

The cylinder 9 defines, at the other end portion of its interior, a pressure chamber 18 of which the volume changes as the plunge 10 axially moves, i.e., increases when the plunger 10 moves in the protruding direction, and decreases when the plunger 10 moves in the pushed-in direction.

A check valve 20 is disposed at the end of the plunger 10 that is inserted in the cylinder 9 so as to allow only the flow of oil from the interior of the plunger 10 toward the pressure chamber 18, and restrict the flow of oil from the pressure chamber 18 into the plunger 10. The check valve 20 includes a valve seat 21 disposed at the end of the plunger 10 inserted in the cylinder 9; a valve hole 21a in the valve seat 21; a spherical valve element 25 that opens and closes the valve hole 21a from the side of the pressure chamber 18 (the valve element 25 is hereinafter referred to as the "check ball 25"); a retainer 26 that restricts the moving range of the check ball 25; and an auxiliary spring 24 disposed between the retainer 26 and the check ball 25, and biasing the check ball 25 in the direction in which the check ball 25 is pressed against the valve seat 21.

The internal space of the plunger 10 defines a reservoir chamber 27 having a diameter larger than the diameter of the valve hole 21a of the check valve 20. The valve seat 21 of the check valve 20 is mounted at the other end of the reservoir chamber 27. The valve seat 21 has a columnar shape, and the valve hole 21a extends through the valve seat 21 along its center axis from the one to the other end thereof. While the valve element 25 is separated from the valve hole 21a toward the other end, the pressure chamber 18 communicates with the reservoir chamber 27 via the valve hole 21a.

Between an outer periphery 15 of the plunger 10 and an inner periphery 14 of the cylinder 9, a leakage gap 19 is defined which allows leakage of oil from the pressure chamber 18 to outside the pressure chamber 18. The leakage gap 19 is a minute gap. For example, its size is such that the difference in radius between the inner periphery 14 of the cylinder 9 and the outer periphery 15 of the plunger 10 is within the range of 0.005 to 0.100 mm.

Also defined between the outer periphery 15 of the plunger 10 and the inner periphery 14 of the cylinder 9 is an oil supply space 28 communicating with the leakage gap 19. The oil supply space 28 is an annular space defined between a recess 16 formed in the outer periphery of the plunger 10 to extend the entire circumference thereof, and the inner periphery 14 of the cylinder 9. The recess 16 defining the oil supply space 28 is located at an axially central portion of the plunger 10, and the leakage gap 19 is located on one and the other end sides of the recess 16.

A return spring 33 is mounted in the pressure chamber 18. The return spring 33 has the other end thereof supported by a bottom 13 of the cylinder 9, and presses the plunger 10 at the one end thereof, thereby biasing, with the pressing force, the plunger 10 in the protruding direction.

The plunger 10 has a communication path 30 by which the oil supply space 28 and the reservoir chamber 27 communicate with each other. The communication path 30 also communicates with the leakage gap 19 via the oil supply space 28.

The communication path 30 is disposed such that, with the attachment piece 11 of the cylinder 9 fixed to the wall surface E of the engine, the communication path 30 is located in the upper half of the circumference of the plunger 10, more specifically, located in the radially upper portion of the plunger 10 and within the area of the plunge 10 corresponding to half of the outer circumferential dimension of the plunger 10, and particularly in the embodiment, the communication path 30 is located at the top of the outer periphery of the plunger 10. Thus, any air present in the reservoir chamber 27 can be smoothly discharged through the communication path 30.

The cylinder 9 has an oil supply path 31 through which oil is introduced into the cylinder 9 from outside thereof. The oil supply path 31 is a through hole radially extending through the cylinder 9. As shown in Figs. 2A, 2B and 2C, the inlet of the oil supply path 31 defines an opening 41 that opens to the engine wall surface E. When the chain tensioner 1 is mounted to the engine wall surface E, the opening 41 is connected to oil piping P extending from an engine oil pump. The outlet of the oil supply path 31 opens to a cylindrical surface on the inner periphery of the cylinder 9 at a position facing the oil supply space 28. Through the oil supply path 31, oil supplied from the engine oil pump is introduced into the cylinder 9 from outside thereof.

Mounted in the oil supply path 31 is a reverse flow check valve 40 that allows a flow of oil from outside to inside of the cylinder 9, and restricts the flow of oil from inside to outside of the cylinder 9.

The reverse flow check valve 40 includes the opening 41 of the oil supply path 31, which opens to the outside of the cylinder 9; a valve hole 43 at the opening 41; a valve element 44 disposed inside the cylinder 9 for opening and closing the valve hole 43; and a spring 45 biasing the valve element 44 toward the valve hole 43, i.e., in the valve closing direction. The valve hole 43 is formed in a valve seat 42 to extend therethrough from its front to back, and the valve seat 42 is fixedly press-fitted to the inner periphery of the opening 41.

In fixedly press-fitting the valve seat 42 to the inner periphery of the opening 41, as shown in the modified example of Fig. 4, a crimped portion 47 may be provided around the opening 41 to prevent the valve seat 42 from being pulled out. The crimped portion 47 may be formed by plastically deforming the metal material around the opening 41. By preventing the valve seat 42 from being pulled out 41 with the crimped portion 47, the valve seat 42 may not necessarily be fixed to the opening 41 by press-fitting, only if the valve seat 42 is inserted in the inner periphery of the opening 41 so as to be at least immovable in the opening 41.

Of the two ends of the spring 45, the inner end, i.e., the end on the inner side of the cylinder 9, is supported by a step 46 at an intermediate portion of the oil supply path 31, while the outer end, i.e., the end on the outer side of the cylinder 9, abuts the valve element 44. In the embodiment, the spring 45 is a tapered coil spring of which the outer end, i.e., the end on the side of the valve element 44, has a small diameter, and the inner end has a large diameter. Thus, the inner end of the spring 45 has a large circumferential dimension, and thus is stably supported by the step 46. The outer end of the spring 45 has an inner diameter slightly smaller than the diameter of the valve element 44, which is a spherical member (check ball), so that the outer end is capable of easily supporting the spherical valve element 44 by fitting over the outer surface of the valve element 44.

A seal ring 50 is disposed between the outer periphery 15 of the plunger 10 and the inner periphery 14 of the cylinder 9, at a position closer to the one end than is the oil supply path 31. The seal ring 50 is received in a seal groove 51 formed in the outer periphery 15 of the plunger 10, and serves to reduce the amount of oil leaking out of the cylinder 9 through the leakage gap 19. The seal ring 50 may be, for example, an annular member made of resin, rubber or metal.

The operation of the chain tensioner 1 is now described. During normal operation, when the tension in the chain 6 exceeds the thrust force of the return spring 33, which is biasing the plunger 10, the plunger 10 moves in the pushed-in direction under the tension in the chain, thereby absorbing the tension in the chain 6, and together with the plunger 10, the valve seat 21 moves toward the pressure chamber 18. Because the volume of the pressure chamber 18 decreases with the movements of the plunger 10 and the valve seat 21 in this direction, the pressure in the pressure chamber 18 exceeds the pressure in reservoir chamber 27, and the check valve 20 closes, sealing the pressure chamber 18. While the check valve 20 is closed, the oil that has flowed out of the pressure chamber 18 mostly returns to the reservoir chamber 27 after flowing through the leakage gap 19, the oil supply space 28, and the communication path 30. Due to the viscous resistance of the oil flowing through the leakage gap 19, a damper force is generated, which slows down the movement of the plunger 10.

When the tension in the chain 6 decreases during operation of the engine, the plunger 10 moves in the protruding direction under the biasing force of the return spring 33, removing slack in the chain 6. As the plunger 10 moves in the protruding direction, the volume of the pressure chamber 18 increases, and the pressure in the pressure chamber 18 drops below the pressure in the reservoir chamber 27. This opens the check valve 20, and allows oil to flow from the reservoir chamber 27 through the valve hole 21a of the check valve 20 into the pressure chamber 18, thus allowing rapid movement of the plunger 10. Simultaneously, under the oil pump pressure, oil is introduced from the engine-side oil piping into the reservoir chamber 27 via the oil supply path 31, the oil supply space 28, and the communication path 30. Thus, the pressure in the reservoir chamber 27 is less likely to drop, which in turn improves the ability of the chain tensioner to quickly re-tension the slack chain.

Because this chain tensioner 1 defines within the plunger 10 a reservoir chamber 27 having a diameter larger than the diameter of the valve hole 21a of the check valve 20, it is possible to store a large amount of oil in the plunger 10. Thus, even while, immediately after the engine is started, no oil is supplied to the chain tensioner 1 from the engine, the chain tensioner is capable of generating a damper force using the oil stored in the reservoir chamber 27.

During operation of the engine, because oil is supplied from the engine-side oil piping P through the oil supply path 31 into the cylinder 9, and then flows through the communication path 30 into the reservoir chamber 27 within the plunger 10, enough oil normally remains in the cylinder 9. However, in the conventional chain tensioner 60, when the engine stops, and the supply pressure in the engine-side oil piping P disappears, oil flows in the reverse direction through the opening 41 of the oil supply path 31 toward the oil piping P, and flows out of the cylinder 9. This could, depending on the operating conditions, result in shortage of oil in the cylinder 9 immediately after the engine is started.

In contrast, according to the present invention, because the reverse flow check valve 40 is disposed in the oil supply path 31, when the oil pressure in the engine-side oil piping P drops, or if there remains no oil in the oil piping P, the valve element 44 of the reverse flow check valve 40 is pressed against the valve seat 42 due to the pressure difference between the interior of the oil piping P and the interior of the cylinder 9, and as a result, the valve hole 43 is closed, so that any oil that has leaked out of the pressure chamber 18 through the leakage gap 19 is prevented from flowing into the engine-side oil piping P. This in turn prevents shortage of oil in the cylinder 9 immediately after the engine is started. Not only immediately after the engine is started, but until oil in the oil piping P reaches the cylinder 9 after the engine is started, it is possible to prevent oil from flowing from the cylinder 9 side toward the oil piping P. While the engine is stopped, the interior of the oil piping P tends to be under negative pressure, so that even while the (positive) oil pressure in the cylinder 9 is relatively low, oil could flow out toward the oil piping P. Thus, the provision of the reverse flow check valve 40 is meaningful in this regard too.

Also, because the reverse flow check valve 40 includes a spring 45 biasing the valve element 44 in the valve closing direction, i.e., toward the valve seat of the valve hole 43, even while the pressure difference between the interior of the oil piping P and the interior of the cylinder 9 is small, the reverse flow check valve 40 can be reliably closed by pressing the valve element 44 against the valve seat 42.

Further, the reverse flow check valve 40 prevents any air present in the oil piping P when the engine is started, from flowing into the cylinder 9. This in turn prevents insufficient damping effect due to air flowing into the pressure chamber 18 via the reservoir chamber 27 and getting trapped in the pressure chamber 18.

The valve hole 43 of the reverse flow check valve 40, with which the valve element 44 is brought into and out of contact, is formed in the valve seat 42, and the valve seat 42 is fixedly press-fitted into the opening 41 of the oil supply path 31. The reverse flow check valve 40 can therefore be easily mounted to the oil supply path 31. By providing the crimped portion 47 around the opening 41 to prevent the valve seat 42 from being pulled out, even if a large pressure difference is created between the interior of the oil piping P and the interior of the cylinder 9, or an unexpectedly large external force is applied to the reverse flow check valve 40, it is possible to prevent separation of the reverse flow check valve 40 from the oil supply path 31.

Further in the embodiment, because a seal ring 50 is disposed between the outer periphery 15 of the plunger 10 and the inner periphery 14 of the cylinder 9 at a position closer to the one end than is the oil supply path 31, oil that has been stopped from flowing toward the oil piping P by the reverse flow check valve 40 is prevented from flowing out of the cylinder 9 via the leakage gap 19.

The embodiment disclosed above is a mere example in every respect and should not be understood to limit the invention. The scope of the present invention should be interpreted, not based on the description above, but by the attached claims, and it should be understood that the claims cover not only what is literally recited in the claims, but cover every modification that is considered to be equivalent to any claimed limitation.

### DESCRIPTION OF THE REFERENCE SYMBOLS

1. Chain tensioner
9. Cylinder
10. Plunger
14. Inner periphery
15. Outer periphery
18. Pressure chamber
19. Leakage gap
20. Check valve
30. Communication path
31. Oil supply path
40. Reverse flow check valve
41. Opening
42. Valve seat
43. Valve hole
44. Valve element
45. Spring
47. Crimped portion
50. Seal ring

## Claims

1. A chain tensioner comprising:
a tubular cylinder (9) having one end thereof open, and the other end thereof closed;
a tubular plunger (10) axially slidably supported by an inner periphery of the cylinder (9);
a pressure chamber (18) defined in the cylinder (9) such that a volume of the pressure chamber (18) changes as the plunge (10) axially moves;
a check valve (20) that allows only a flow of oil from an interior of the plunger (10) toward the pressure chamber (18);
a leakage gap (19) between an outer periphery (15) of the plunger (10) and an inner periphery (14) of the cylinder (9);
a communication path (30) that allows communication between the leakage gap (19) and the interior of the plunger (10);
an oil supply path (31) connecting inside of the cylinder (9) to outside of the cylinder (9); and
a reverse flow check valve (40) disposed in the oil supply path (31), and configured to allow a flow of oil from the outside to the inside of the cylinder (9) and restrict a flow of oil from the inside to the outside of the cylinder (9).

2. The chain tensioner according to claim 1, wherein the reverse flow check valve (40) comprises:
an opening (41) of the oil supply path (31), the opening being open to the outside of the cylinder (9);
a valve hole (43) disposed at the opening (41);
a valve element (44) disposed inside the cylinder (9) and configured to open and close the valve hole (43); and
a spring (45) biasing the valve body (44) in a valve closing direction toward the valve hole (43).

3. The chain tensioner according to claim 2, wherein the valve hole (43) is formed in a valve seat (42), and the valve seat (42) is fixedly press-fitted into the opening (41).

4. The chain tensioner according to claim 2 or 3, wherein a crimped portion (47) is disposed around the opening (41) so as to prevent the valve seat (42) from being pulled out.

5. The chain tensioner according to any of claims 2 to 4, wherein the spring (45) is a tapered coil spring having a smaller diameter on the side of the valve body (44).

6. The chain tensioner according to any of claims 1 to 5, further comprising a seal ring (50) disposed between the outer periphery (15) of the plunger (10) and the inner periphery (14) of the cylinder (9), at a position closer to the one end than is the oil supply path (31).
